# EUROPÄISCHE PATENTANMELDUNG

(11) **EP 4 390 388 A1**
(43) Veröffentlichungstag der Anmeldung: **26.06.2024**
(21) Anmeldenummer: 23219061.1
(22) Anmeldetag: 21.12.2023
(51) Int. Cl.: G01N 29/14, B23K 20/10, B23K 31/12, G01N 29/44, G01N 29/46

(54) **VERFAHREN ZUM ÜBERPRÜFEN DER QUALITÄT ZUMINDEST EINER ULTRASCHALLSCHWEISSVERBINDUNG, MESSVORRICHTUNG UND COMPUTERPROGRAMM**

(30) Priorität: 21.12.2022 EP 22215269
(71) Anmelder: Xarion Laser Acoustics GmbH, 1030 Wien (AT)
(72) Erfinder: KANIAK, Georg, 1030 Wien (AT); FISCHER, Balthasar, 1030 Wien (AT)
(74) Vertreter: Vossius & Partner Patentanwälte Rechtsanwälte mbB

(57) **Zusammenfassung**

Die Erfindung betrifft ein Verfahren zum Überprüfen der Qualität zumindest einer Ultraschallschweissverbindung während dem Erzeugen der Ultraschallschweissverbindung, mit zumindest einer Schwingungsaufnahmeeinrichtung 21, und einer Recheneinrichtung 30 umfassend zumindest die folgenden Schritte: Detektieren von Schwingungssignalen SS mit der zumindest einen Schwingungsaufnahmeeinrichtung 21, wobei die Schwingungssignale SS von zumindest einer Komponente einer Ultraschallschweissvorrichtung 80 und zumindest einem Werkstück 15 beeinflusst werden; Erzeugen von elektrischen Messsignale EM in der Schwingungsaufnahmeeinrichtung 21 auf Basis der detektierten Schwingungssignale SS; Übermitteln der elektrischen Messsignale EM an die Recheneinrichtung 30; Bearbeiten zumindest eines Signalblocks SB der elektrischen Messsignale EM in der Recheneinrichtung 30; Errechnen zumindest eines Kennwerts auf Basis des zumindest einen Signalblocks SB der elektrischen Messsignale EM; Vergleichen des zumindest einen Kennwert mit zumindest einem Referenzwert in der Recheneinrichtung 30; Bestimmen einer für die Qualität der Ultraschallschweissverbindung indikative Information basierend auf dem Vergleich des zumindest einen Kennwert mit dem zumindest einem Referenzwert. Die Erfindung betrifft weiters eine Messvorrichtung 20 sowie ein Computerprogramm.

## Beschreibung

Die vorliegende Erfindung betrifft ein Verfahren zum Überprüfen der Qualität zumindest einer Ultraschallschweissverbindung gemäss dem Patentanspruch 1, eine Messvorrichtung gemäss dem Patentanspruch 12, und ein Computerprogramm gemäss dem Patentanspruch 15.

### Technologischer Hintergrund

Ultraschallschweissen nutzt die Reibungswärme, zwischen einem Schwinger (auch Sonotrode genannt) und zumindest zwei miteinander zu verschweissende Werkstückteile, um die beiden Oberflächen des Werkstücks so weit zu erhitzen, sodass eine Schweißverbindung entsteht. Die Frequenz des Schwingers liegt dabei typischerweise im Ultraschallbereich ab 20 kHz und darüber. Bei angemessener Vorbereitung der beiden Werkstückteile sind mit diesem Verbindungsverfahren gleichbleibend gute Ergebnisse hinsichtlich der Schweissverbindung zu erzielen. Allerdings gibt es Einflussfaktoren, wie die Kontamination der Oberfläche der Werkstückteile durch Öle, Feuchtigkeit, Fingerabdrücke, abgenutzte Werkzeuge, unpassende Anpressdrücke, falsche Positionierungen oder eine zu geringe Haltekraft der Einspannung der Werkstücke, welche die Qualität der Schweissverbindung negativ beeinflussen können. Diese Einflussfaktoren oder Abweichungen in der Haltekraft laufend zu überwachen, dient dazu ansonsten unerkannte Fehler zu detektieren.

Aus dem Stand der Technik ist die DE 10 2013 222876 A1 bekannt. Dort ist ein Vibrationsschweisssystem offenbart, welches einen Schweissroboter mit einer Vibrationsschweisseinrichtung, einem Schweisshorn und eine Kontrollstation umfasst, welche ausgestaltet ist, um eine Schweissnaht auf einem zwischen dem Schweisshorn und einem Schweissamboss eingespannten Werkstück zu bilden. Der Roboter dreht oder bewegt das Schweisshorn und den Amboss in vorgeschriebenen Intervallen zu einer Kontrollstation, z. B. durch Verschwenken von einem Prozess-Förderband zu der Kontrollstation ein Mal pro Schicht. Im Vibrationsschweisssystem sind eine Hostrechnervorrichtung und mehrere Sensoren vorhanden, wobei die Sensoren einen akustischen Sensor umfassen. Die Hostrechnervorrichtung ist ausgestaltet, um ein voraufgezeichnetes akustisches Basisliniensignal an den akustischen Sensor zu übertragen, das übertragene voraufgezeichnete akustische Basisliniensignal über den akustischen Sensor aufzuzeichnen, und das aufgezeichnete Signal mit dem voraufgezeichneten akustischen Basisliniensignal zu vergleichen, um eine Signalschwankung zu bestimmen.

Nachteilig an der bekannten Lösung ist, dass die Hostrechnervorrichtung einzelne Schritte des Verfahrens in regelmässigen vorgeschriebenen Intervallen auswertet, wobei das Werkstück die Produktionslinie verlässt. Eine lückenfreie Echtzeit-Überwachung der Schweissverbindungen am Werkstück im Prozess ist somit nicht gegeben.

Aus dem Stand der Technik ist die DE 10 2019 134 555 A1 bekannt. Das offenbarte System weist einen Schallsensor, einen Elektrosensor und eine Auswerteeinheit auf, wobei der Schallsensor dazu ausgebildet ist, Werte eines Körperschalls des Bauteils beim Schweissen zu messen. Der Elektrosensor ist dazu ausgebildet, Werte mindestens eines elektrischen Betriebsparameters bei dem Schweissprozess bzw. beim Schweissen zu messen. Die Auswerteeinheit ist dazu ausgebildet, die Schweissnaht auf Grundlage der gemessenen Werte zu bewerten. Der Schallsensor ist dazu ausgebildet, neben Werten für die Frequenz und/oder Amplitude des Körperschalls des Bauteils, auch Werte eines Körperschalls mindestens einer Komponente der Schweissvorrichtung zu messen. Es wird ein Warnsignal erzeugt, wenn mindestens ein gemessener Wert der Frequenz und/oder der Amplitude des Körperschalls, des Stroms und/oder der Spannung um einen hierfür jeweils vorgesehenen Toleranzwert von einem hierfür jeweils vorgesehenen Sollwert abweicht, wobei es vorgesehen ist, dass der Schweissprozess je nach Abweichung eines Istwerts von dem jeweiligen Sollwert abgebrochen wird.

Nachteilig an der bekannten Lösung ist, dass keine Qualitätsbestimmung der Schweissnaht erfolgt, sondern lediglich ein Schweissprozess abgebrochen wird, wenn ein Toleranzwert überschritten ist.

Aus dem Stand der Technik ist die US 2019/271669 A1 bekannt. Beschrieben werden Methoden, Systeme und nichtflüchtige computerlesbare Speichermedien mit Programmen zur Überwachung eines Ultraschallverbindungsvorgangs mittels akustischer und/oder Vibrationsmessungen und zur Analyse der Messungen, um die Qualität einer daraus resultierenden Schweissnaht vorherzusagen.

Aus dem Stand der Technik ist die DE 10 2019 109264 A1 bekannt. Dort wird ein Verfahren zur Qualitätsüberwachung beim Ultraschallschweissen offenbart, wobei während des Fügevorgangs das Schwingungsverhalten hinsichtlich eines Istwerts der Schwingungsfrequenz und/oder der Schwingungsamplitude mindestens eines beteiligten Fügepartners ermittelt wird. Weiters wird eine Messvorrichtung offenbart, die zur Quantifizierung mechanischer Schwingungen ausgebildet ist. Das erfasste Schwingungsverhalten wird mittels einer Fourier-Analyse ermittelt und mit einem vorgegebenen Zielwert als Referenzwert verglichen.

Aus dem Stand der Technik ist die DE 10 2015 120165 A1bekannt. Diese offenbart eine Vorrichtung und ein Verfahren zur Überwachung und/oder Bestimmung der Reinheit und Verbindungsgüte einer mittels einer Ultraschallschweissung hergestellten Verbindungsstelle zweier Fügepartner. Dabei wird das Schwingungsverhalten während dem Fügeprozess hinsichtlich eines Ist-Wertes der Schwingungsfrequenz und/oder der Schwingungsamplitude wenigstens eines am Fügeprozess beteiligten Fügepartners und/oder beim Fügeprozess verwendeten Werkzeugs einer Ultraschallschweissvorrichtung mittels Messung mit wenigstens einer Messvorrichtung erfasst und mit einem vorbestimmten Soll-Wert als Referenzwert verglichen. Die Messeinrichtung, ein Laservibrometer, ist ausbildet, zur Quantifizierung der mechanischen Schwingungen.

Nachteilig an den bekannten Lösungen sind, dass die Auswertemethoden der Messsignale zu den Schwingungsverhalten nur rudimentär erfolgen und daher die Genauigkeit der Auswertungen für industriellen Ultraschallschweissverbindungen nicht erreichbar ist, sodass eine brauchbare Qualitätsbestimmung von Ultraschallschweissverbindungen nicht möglich ist Es wird lediglich eine einfache und kostengünstige Überwachungsmöglichkeit offenbart.

### Darstellung der Erfindung

Eine Aufgabe der Erfindung besteht darin mindestens einen der Nachteile des Standes der Technik zu vermeiden, insbesondere soll eine verbesserte Echtzeit-Überwachung der Erzeugung einer Ultraschallschweissverbindung bereitgestellt werden, um eine verbesserte Qualitätsbestimmung der Haltekraft der Ultraschallschweissverbindung im Schweissprozess zu gewährleisten.

Diese Aufgabe wird durch die Merkmale der unabhängigen Patentansprüche gelöst. Vorteilhafte Weiterbildungen sind in den Figuren und in den abhängigen Patentansprüchen dargelegt.

Ein erfindungsgemässes Verfahren zum Überprüfen der Qualität zumindest einer Ultraschallschweissverbindung während dem Erzeugen der Ultraschallschweissverbindung an zumindest einem Werkstück, mit zumindest einer Schwingungsaufnahmeeinrichtung, und einer Recheneinrichtung umfasst zumindest die folgenden Schritte:
a) Detektieren von Schwingungssignalen mit der zumindest einen Schwingungsaufnahmeeinrichtung, wobei die Schwingungssignale von zumindest einer Komponente einer Ultraschallschweissvorrichtung und dem zumindest einem Werkstück beeinflusst werden;
b) Erzeugen von elektrischen Messsignale in der Schwingungsaufnahmeeinrichtung auf Basis der detektierten Schwingungssignale;
c) Übermitteln der elektrischen Messsignale an die Recheneinrichtung;
d) Bearbeiten zumindest eines Signalblocks der elektrischen Messsignale in der Recheneinrichtung;
e) Errechnen zumindest eines Kennwerts auf Basis des zumindest einen Signalblocks der elektrischen Messsignale;
f) Vergleichen des zumindest einen Kennwerts mit zumindest einem Referenzwert in der Recheneinrichtung;
g) Bestimmen einer für die Qualität der Ultraschallschweissverbindung indikative Information basierend auf dem Vergleich des zumindest einen Kennwert mit dem zumindest einem Referenzwert.

Damit kann das Arbeitsverhalten einer Ultraschallschweissvorrichtung im Prozess kontinuierlich und automatisch, lückenlos in Echtzeit, überprüft werden, wodurch eine verbesserte Qualitätsbestimmung der Haltekraft der Ultraschallschweissverbindung im Prozess gewährleisten ist. Die bevorzugt kontinuierlich detektierten Schwingungssignale können Luftschallsignale oder Körperschallsignale umfassen oder aus einer Strom- oder Spannungsmessung zumindest eines Piezoaktuators resultieren. Die für die Qualität der Ultraschallschweissverbindung indikative Information umfasst beispielsweise die Information einer Schweissverbindung für ein weiterverwendbares Werkstück (OK-Werkstück) oder einer Schweissverbindung für ein nicht-weiterverwendbares Werkstück (NOK-Werkstück). Ob ein Werkstück für dessen vorgesehenen Gebrauch weiterverwendbar ist, oder nicht, wird typischerweise mithilfe eines Anzugtests (zerstörende Prüfmethode) für die Ultraschallschweissverbindung an einer externen Testvorrichtung vorab überprüft. Die Schwingungssignale, bzw. deren elektrischen Messsignale oder Signalblöcke, eines OK-Werkstücks können anschliessend als Referenzwert in der Recheneinrichtung, beispielsweise als Tabellenwert, hinterlegt werden, um diese im Prozess mit den errechneten Kennwerten in der Recheneinrichtung zu vergleichen. Das vorliegende Verfahren macht einen nachfolgenden Anzugstest am Werkstück obsolet. Die Einteilung der erstellten Werkstücke mit einer Ultraschallschweissverbindung in zwei Kategorien (gut oder schlecht, bzw. OK oder nOK) führt zu einer schnellen Entscheidung im Herstellprozess, sodass ein erhöhter Produktionszyklus und damit eine erhöhte Prozessleistung möglich ist. Insbesondre ist die Klassifizierung in OK und nOK an die Haltekraft der Ultraschallschweissverbindung gebunden, zum Beispiel kann eine Ultraschallschweissverbindung mit einer Haltekraft von >200 Newton als gut (OK) erachtet werden, und eine Ultraschallschweissverbindung mit einer Haltekraft von <100 Newton als schlecht (nOK). Die Grenzwerte sind je nach Applikation und Material unterschiedlich und können von wenigen Newton bis mehrere Kilonewton reichen. Manchmal ist auch eine Unterteilung in Subklassen möglich, wo Ultraschallschweissverbindungen in verschiedene Klassen eingeteilt werden, z.B. <50N; 50-100N; 100-200N, usw. Der Newton-Wert bzw. die Kraftwirkung lässt sich bislang nur in zerstörender Prüfung (Zugtest) ermitteln. Es wird daher ein Verfahren bereitgestellt, welches die Haltekraft der Ultraschallschweissverbindung zerstörungsfrei voraussagt. Idealerweise wird die vorausgesagte Haltekraft der Ultraschallschweissverbindung zudem unmittelbar nach der Herstellung der Verschweissung (innerhalb einer Sekunde) ausgegeben, und nicht erst in Folge einer nachgelagerten, separaten externen Prüfung.

Eine Ultraschallschweissvorrichtung kann verwendet werden, um Schweissverbindungen an einem ursprünglich zweiteiligen Werkstück zu bilden, wobei ein erster Teil des Werkstücks ein Litzendraht typischerweise aus Kupfer oder Aluminium und ein zweiter Teil des Werkstücks ein Terminal aus Materialien wie Kupfer, Messing mit verschiedenen Beschichtungen sein kann. Ebenso kann es sich bei dem zweiteiligen Werkstück um massive Metallteile, wie Hülsen oder auch um Kunststoffteile handeln. Ein typischer Ultraschallschweissprozess von Litzendrähten auf einen Terminal besteht aus einem Precompacting, dem Hauptschall, sowie einem Impuls zur Trennung der Sonotrode vom Werkstück. Information zur Qualität der Schweissung kann sowohl im Signal des Hauptschalls als auch im Signal des Precompacting enthalten sein und kann mit den hier vorliegenden Verfahren ausgewertet werden. Damit sind zumindest zwei der drei Prozessschritte beim Ultraschallschweissen auswertbar, sodass eine verbesserte Bestimmung der für die Qualität der Ultraschallschweissverbindung relevante indikative Information ermöglicht ist.

Die Ultraschallschweissvorrichtung umfasst typischerweise einen Konverter, einen Booster, einen Generator und eine Sonotrode. Für das vorliegende Verfahren bildet zumindest die Sonotrode zusammen mit dem Werkstück ein mechanisches Schwingungssystem, welches eine Veränderung der Schwingungssignale bewirkt. Die Grundfrequenz des Schwingungssignals liegt typischerweise bei 20kHz, kann aber auch bei höheren (bis 100kHz oder darüber) oder niedrigeren Frequenzen (einige kHz oder drunter) liegen. Gleichzeitig werden höhere Harmonische erzeugt, als Vielfaches n der Grundfrequenz, wobei n eine oder mehrere beliebige, ganze Zahlen 1, 2, 3, ... annehmen kann. Obertöne oder Harmonische können bis in den Frequenzbereich von mehreren 100kHz vordringen. Ferner entstehen Summen- und Differenzfrequenzen, so dass sich ein komplexes, und sich zeitlich veränderndes Frequenzspektrum durch das Schwingungssystem ergibt. Das Schwingungsverhalten dieses Systems kann durch verschiedene Einflüsse, wie beispielsweise Grösse des Werkstücks, ein Anpressdruck der Sonotrode auf das Werkstück, eine Temperatur der Sonotrode, eine Schwingungsamplitude der Sonotrode, Materialkombinationen, aber auch Oberflächenkontaminationen am Werkstück, oder eine Einspannung des Werkstücks (Position und/oder Kraft), beeinflusst sein. Diese Veränderungen des Schwingungsverhaltens können Indikatoren für eine Veränderung der Güte der Schweissverbindung sein.

Es können vorab mehrere Schwingungssignale von Ultraschallschweissvorgängen unter kontrollierten Bedingungen aufgenommen und als Referenzwerte für Schweissvorgänge mit gewünschtem Ergebnis (OK-Werkstücke) in einer Speichereinrichtung als Tabellenwerte gespeichert werden und von der Recheneinrichtung abgefragt werden.

Insbesondere erfolgt nach dem Schritt g) eine Ausgabe zumindest eines Warnsignals. Als Warnsignal kann ein akustisches oder ein visuelles Warnsignal vorgesehen sein, welches an einer Anzeigeeinrichtung ausgegeben, oder angezeigt, wird. Damit kann ein OK-Werkstück oder ein NOK-Werkstück in Echtzeit im Prozess überprüft werden und das Ergebnis einem Benutzer unmittelbar mitgeteilt werden. Die Art oder Ausgabe des Warnsignals kann von der indikative Information abhängig sein, sodass anhand des Warnsignals erkennbar ist, ob das gerade fertig geschweisste Werkstück NOK oder OK ist. Die Recheneinrichtung kann während oder nach dem Überprüfen des Werkstücks die Anzeigeeinrichtung veranlassen, das Warnsignal, das für ein NOK-Werkstück oder ein OK-Werkstück steht, anzuzeigen, damit kann ein Benutzer die Qualität der Schweissverbindung sofort erkennen.

Insbesondere erstellt eine Recheneinrichtung Steuerdaten für die Steuereinrichtung der Ultraschallschweissvorrichtung, wobei die Steuerdaten den Weitertransport des geschweissten Werkstücks steuern. Beispielsweise kann die Recheneinrichtung die Steuereinrichtung veranlassen, eine Werkstücktransporteinrichtung der Ultraschallschweissvorrichtung derart zu steuern, dass ein NOK-Werkstück ausgeworfen wird und somit ein nOK-Werkstück im weiteren Verarbeitungsprozess nicht mehr verwendet wird. Somit werden Ressourcen gespart.

Insbesondere werden zumindest zwei Schwingungssignale in einem einzigen Bereich oder einer einzigen Position, beabstandet von der zumindest einen Komponente der Ultraschallschweissvorrichtung und dem zumindest einem Werkstück, detektiert. Die Schwingungssignale bzw. die akustischen Signale, welches für die Überwachung der Qualität des Schweissprozesses massgeblich sind, werden typischerweise an verschiedenen Positionen und in verschiedene Richtungen von der zumindest einen Komponente der Ultraschallschweissvorrichtung und dem zumindest einem Werkstück abgestrahlt. Diese Positionen liegen einige 10-Zentimeter auseinander, im Bereich der Sonotrode. Der zuvor genannte einzige Bereich ist zumindest kleiner als 20 Zentimeter, wobei die Schwingungsaufnahmeeinrichtung insbesondere in diesem einzigen Bereich positioniert ist und die zumindest zwei Schwingungssignale detektiert. Für eine stabile und verlässliche Qualitätsüberwachung des Schweissvorganges ist es essentiell, dass die gesamten Schwingungssignale bzw. die gesamte Akustik gleichzeitig überwacht werden. Da sich der Luftschall und damit die Schwingungssignale typischerweise überlagern bzw. eine Superposition vorliegt, kann somit ein einziger Schwingungsaufnahmeeinrichtung in einem einzigen Bereich bzw. an einer einzigen Position, beanstandet von der zumindest einen Komponente der Ultraschallschweissvorrichtung und dem zumindest einem Werkstück, den gesamten Ultraschallschweissprozess überwachen.

Vorzugsweise werden die übermittelten elektrischen Messsignale mithilfe der Recheneinrichtung zeitlich abgetastet. Damit ist das elektrische Messsignal quantisiert verarbeitet, sodass das elektrische Messsignal mit einer verbesserte Signalqualität bearbeitet werden kann.

Insbesondere wird die Polarität der elektrischen Messsignale in der Recheneinrichtung ausgewertet. Dabei werden die elektrischen Messsignale je nach Polarität in binäre Signale, in >0 oder <=0, unterteilt. Damit sind nicht benötigte Signalteile des Schwingungssignals unberücksichtigt und die elektrischen Messsignale lassen sich vereinfacht in der Recheneinrichtung weiterverarbeiten.

In einer weiteren Ausführungsform werden die elektrischen Messsingale in Signalblöcke unterteilt. Damit werden die elektrischen Messsignale weiter quantisiert, um in der Recheneinrichtung vereinfacht, und im Vergleich zu den kontinuierlichen Schwingungssignalen, verbessert weiterverwendbar zu sein. Insbesondere beträgt die Signallänge eines Signalblocks weniger als 100ms. Insbesondere überschneiden sich die unterteilten Signalblöcke nicht, sodass eine Verfälschung der für die Qualität der Schweissverbindung indikative Information verhindert ist. Bevorzugt werden die ersten unterteilten Signalblöcke verworfen und nicht für die weitere Auswertung in den nachfolgenden Schritten herangezogen, sodass anfängliche Messunsicherheiten unberücksichtigt bleiben und nicht zur Qualität der für die Schweissverbindung indikativen Information beitragen.

Vorzugsweise wird im Schritt d) eine Fourier Transformation (FT) mit zumindest dem einen bearbeiteten Signalblock durchgeführt. Dabei wird der zumindest eine Signalblock in seine Bestandteile zerlegt. Diese Bestandteile können einzelne Sinus-Schwingung bei diskreten Frequenzen sein, deren Amplitude und Phase bestimmt werden. Die FT erlaubt also eine verbesserte Sicht auf ein Signal im Frequenzbereich. Die erzeugten FT-Koeffizienten des transformierten Schwingungssignals können in weitere Folge einfach weiterverarbeitet und ausgewertet werden. Die FT zerlegt ein Signal in einzelne Spektralkomponenten und gibt dadurch Aufschluss über seine Zusammensetzung. Das Schwingungssignal kann somit in seiner Gesamtheit zerlegt werden, oder zerlegt in Blöcke als binäres Signal oder Amplitudensignal einer Zeit-Frequenz-Transformation, etwa einer Fourier-Transformation oder verschiedenen Varianten der Wavelet-Transformation, unterworfen werden. Beispielsweise wird im Schritt d) die Fourier Transformation (FT) in der Form einer Fast-Fouriertransformation (FFT) oder einer ShortTime-Fouriertransformation (STFT) mit zumindest dem einen bearbeiteten Signalblock durchgeführt. Insbesondere werden die erzeugten FT-Koeffizienten des transformierten Schwingungssignals zur Gewinnung von Merkmalsvektoren herangezogen, die als Basis für Machine-Learning-Algorithmen in einem KI (künstliche Intelligenz) Modul dienen. Das KI-Modul kann anschliessend den zumindest einen Kennwert zur Verfügung stellen. Ganz allgemein dient das KI Modul dazu ein statistisches Modell aufzubauen, das auf Trainingsdaten beruht und unter Verwendung von Testdaten getestet wird, um schließlich auf die Daten laufender Schweißungen im Produktionsprozess angewandt zu werden. Unter den verwendbaren Algorithmen sind insbesondere überwachte (supervised) ML Algorithmen zu verstehen, bei denen mittels eines Trainingsdatensatzes ein Modell trainiert wird, das auf weitere Evaluierungsdaten angewandt wird um eine Klassifikation (OK vs. NOK) oder eine Regression (Schätzung eines kontinuierlichen Wertes - etwa der Kraftwert einer zerstörenden Prüfung) zu berechnen. Unter den Ansätzen um solche Modelle zu trainieren sind Deep Learning (künstliche neuronale Netze) wo mehrere Schichten künstlicher Neuronen die Eingangsgrößen (Merkmalsvektor) mit der Ausgangsgröße (Klassifikation, Regression...) verknüpfen zu nennen. Ebenso können, neben zahlreichen anderen Machine Learning Methoden, Random Forest Algorithmen (randomisierte Entscheidungsbäume) oder Support Vector Machines (Schätzung mittels Stützvektoren im Vektorraum der Merkmalsvektoren) eingesetzt werden, insbesondere um den Rechenaufwand zu begrenzen. Beispielsweise werden die erzeugten FT-Koeffizienten zu Schweissverbindungen von OK-Werkstücken erstellt und als KI-Trainingsdaten dem KI-Modul zur Verfügung gestellt. Damit ist es möglich mit dem so trainierten Modell für weitere Schwingungssignale vorherzusagen, ob die Abzugskraft über oder unter einem vorgegebenen Toleranzbereich bzw. Referenzwert zu liegen kommt. Das KI-Modul kann somit wesentliche Parameter zur Beurteilung von OK-Werkstücken oder nOK-Werkstücke liefern.

In einer weiteren Ausführungsform wird im Schritt d) eine Hilbert Transformation mit zumindest dem einen bearbeiteten Signalblock durchgeführt. Insbesondere wird der zumindest eine transformierte Signalblock einem KI-Modul übermittelt, oder insbesondere an ein Regressions-Modul übermittelt wird.

In einer weiteren Ausführungsform wird im Schritt d) eine Continuous-Wavelet-Transformation mit zumindest dem einen bearbeiteten Signalblock durchgeführt. Insbesondere wird der zumindest eine transformierte Signalblock einem KI-Modul übermittelt, oder insbesondere an ein Regressions-Modul übermittelt.

In einer weiteren Ausführungsform wird im Schritt d) eine Cepstrum Transformation mit zumindest dem einen bearbeiteten Signalblock durchgeführt. Insbesondere wird der zumindest eine transformierte Signalblock einem KI-Modul übermittelt, oder insbesondere an ein Regressions-Modul übermittelt.

Insbesondere wird im Schritt d) der zumindest eine Signalblock einem KI-Modul übermittelt. Dabei wird der zumindest eine Signalblock zur Gewinnung von Merkmalsvektoren herangezogen, die als Basis für Machine-Learning-Algorithmen im KI (künstliche Intelligenz) Modul dienen. Das KI-Modul kann anschliessend den zumindest einen Kennwert zur Verfügung stellen. Beispielsweise werden Referenzmessungen zu Schweissverbindungen von OK-Werkstücken erstellt und als KI-Trainingsdaten dem Kl-Modul zur Verfügung gestellt. Wird hierbei klassifizierendes Maschinelles-Lernen eingesetzt und für eine Zahl an Referenzmessungen (mit guter und verringerter Ablösekraft) an den Werkstücken ein zerstörender Abzugstest vorgenommen, so ist es möglich mit dem so trainierten Modell für weitere Schwingungssignale vorherzusagen, ob die Abzugskraft über oder unter einem vorgegebenen Toleranzbereich bzw. Referenzwert zu liegen kommt. Das KI-Modul kann somit wesentliche Parameter zur Beurteilung von OK-Werkstücke oder nOK-Werkstücke liefern.

Alternativ oder ergänzend wird im Schritt d) der zumindest eine Signalblock einem Regressions-Modul übermittelt. Das Regressions-Modell kann derart trainieren werden, dass ein zu erwartender Kraftwert der zerstörenden Prüfung im Abzugstest als kontinuierlicher Wert geschätzt wird. Dieser kann wiederum als Referenzwert in einer Tabelle in der Speichereinrichtung hinterlegt sein.

In einer weiteren Ausführungsform werden ein oder mehrere Maximalwerte im transformierten Signalblock erfasst, um diese insbesondere entweder einzeln weiterzuverwenden oder dem KI-Modul als Trainingsdaten zur Verfügung stellen zu können. Bevorzugt wird in der näheren Umgebung (um ein Delta) eines Signalblockwerts des transformierten Signalbocks ein Maximum gesucht, sodass die Auswertung der Schweissverbindungen am Werkstück mit einer verbesserten Auflösung durchführbar ist.

Insbesondere wird eine Analysekurve auf Basis des transformierten Signalblocks erzeugt. Die Analysekurve stellt eine charakteristische Kurve des transformierten Signalblocks dar und ist einfach auszuwerten und ist einfach mit Erfahrungswerten zu vergleichen, welche die Auflösung in der Auswertung mit der Recheneinrichtung verbessert.

Vorzugsweise wird eine Differenzkurve zwischen der Analysekurve und einer ersten Referenzkurve erzeugt. Dabei kann die erste Referenzkurve Daten einer Ultraschweissverbindung eines OK-Werkstücks umfassen, sodass die Differenzkurve Differenzwerte um Null aufweist. Somit kann einfach und reproduzierbar ein OK-Werkstück überprüft werden. Die erste Referenzkurve kann in der Speichereinrichtung hinterlegt sein und von der Recheneinrichtung abgefragt werden.

Insbesondere wird der zumindest eine Kennwert mithilfe der Differenzkurve erstellt. Damit ist ein einziger Wert massgebend für die Beurteilung der Qualität der Ultraschallschweissverbindung indikative Information, sodass das Entscheidungsverfahren vereinfacht wird und der Prozess schnell durchführbar ist. Bei der Überschreitung des zumindest einen Kennwerts im Vergleich mit dem Referenzwert ist die Schweissung als nOK-Werkstück bzw. fehlerhaft qualifiziert, oder beim Unterschreiten als OK-Werkstück bzw. fehlerfrei qualifiziert.

Der zumindest eine Kennwert kann insbesondere ein Maß für die Abweichung von der Referenzkurve sein. Durch Addition oder Subtraktion eines Offsets kann die Entscheidungsschwelle verschoben werden, um das System bei bereits trainiertem Modell toleranter oder empfindlicher einzustellen.

Insbesondere ist ein Toleranzbereich im Vergleich vorgesehen, sodass mehrere OK-Werkstücke weiterverwendbar sind. Bevorzugt umfasst der Toleranzbereich bis zu 10% Toleranz im Vergleich des zumindest einen Kennwerts mit dem Referenzwert, sodass Werkstücke mit bis zu einer 10%igen Abweichung (Toleranz) im zuvor beschriebenen Vergleich noch als OK-Werkstücke weiterverwendbar sind.

In einer weiteren Ausführungsform umfassen die Schwingungssignale eine Frequenz eines Luftschallsignals. Die Sonotrode der Ultraschallschweissvorrichtung schwingt typischerweise, getrieben von Piezo-Elementen, mit einer vorgegebenen Frequenz, bei 20 kHz sowie den ensprechenden Harmonischen. Die Qualität der Schweissverbindung ist daher mit einer Frequenzmessung eines Luftschallsignals einfach zu bestimmten. Frequenzmessungen sind robust und reproduzierbar durchführbar, und weisen eine geringere Störanfälligkeit auf. Bevorzugt umfassen die Schwingungssignale eine Frequenz eines Körperschallsignals. Die Qualität der Schweissverbindung ist alternativ zu einer Luftschallmessung mit einer Frequenzmessung eines Körperschallsignals einfach zu bestimmten. Darüber hinaus liegt der Vorteil der zuvor genannten beiden Auswertungen der Frequenzmessungen in einer sehr schmalen Resonanzfrequenz im optimierten Signal-zu-Rausch Verhältnis. Beispielsweise kann mit der Auswertung der Polarität der Faktor Amplitude weitgehend eliminiert werden, da nur noch mit einem Rechtecksignal, das die Frequenz abbildet, gearbeitet wird, sodass eine Amplitudenänderung vollständig ignorierbar ist.

Alternativ oder ergänzend umfassen die Schwingungssignale eine Amplitude eines Luftschallsignals oder eine Amplitude eines Körperschallsignals. Die gewünschte Information über die Qualität der Schweissverbindung kann in der Amplitudeninformation des Schwingungssignals oder des elektrischen Messsignals verbessert abgebildet werden. Die Information ist in den Schwingungssignalen etwas gedämpfter vorhanden, da die Amplitude von verschiedenen Faktoren (Überlagerung durch Reflexion, Positionierung des Sensors, u.a.) beeinflusst werden kann. Mit einer genügend sensitiven Auswertung, wie zuvor beschrieben, wobei die Signalblöcke entsprechend unterteilt sind, können die Amplitudenmessungen von OK-Werkstücken als Trainingsdaten für das KI-Modul eingesetzt werden, sodass die für die Qualität der Schweissverbindung indikative Information verbessert bestimmbar ist. Beispielsweise kann mit der Auswertung der Polarität der Faktor Frequenz weitgehend eliminiert werden, da nur noch mit einem Rechtecksignal, das die Amplitude abbildet, gearbeitet wird und Frequenzänderungen sind vollständig ignorierbar.

Alternativ resultieren die Schwingungssignale aus einer Strom- oder Spannungsmessung eines Piezoaktuators. Die Strom- oder Spannungsmessungen zumindest eines Piezoaktuators, mit dem die Sonotrode angetrieben ist, können ebenfalls einfach zum Auswerten der für die Qualität der Schweissverbindung indikative Information verwendet werden, wobei die Strom- oder Spannungsmessungen aus OK-Werkstücken und nOK-Werktstücken als Trainingsdaten für das KI-Modul eingesetzt werden.

Vorzugsweise werden die Höherharmonischen der Schwingungssignale detektiert. Damit sind die zuvor genannten Auswertungen der Schwingungssignale weiter sensibilisiert, und eine verbesserte Datenanalyse mit einer hohen Auflösung möglich. Insbesondere werden die Höherharmonischen der Schwingungssignale bekannter OK-Werkstücke und nOK-Werkstücke als Trainingsdaten für das KI-Modul bereitgestellt, sodass die Auswertung verbessert durchführbar ist.

Insbesondere werden die Höherharmonischen der Schwingungssignale im Schritt d) bearbeitet. Damit kann nicht nur das Grundsignal der Schwingungssignale in der FT oder im KI-Modul bearbeitet werden, sondern auch die Signale deren Höherharmonischen, sodass eine hohe Datenmenge basierend auf den Schwingungssignalen auswertbar ist, um die für die Qualität der Schweissverbindung indikative Information mit einem gewünschten Signal-zu-Rausch-Verhältnis zu berechnen.

In einer weiteren Ausführungsform wird eine Temperaturabhängigkeit der detektierten Schwingungssingale zumindest im Schritt g) miteinbezogen. Durch Vergleich von Temperatur-Referenzsignalen mit weiterer Information in den Schwingungssignalen kann eine weiter verbesserte Aussage zumindest über nOK-Werkstücke getroffen werden. Abweichungen, die keinen unmittelbaren Einfluss auf die für die Qualität der Schweissverbindung indikative Information haben, wie etwa in einem gewissen Bereich Änderungen, welche durch eine sich ändernde Temperatur der Sonotrode hervorgerufen werden, können durch ein Miteinbeziehen von Temperaturwerten, gemessen mittels zumindest einen Temperatursensors, kompensiert werden. Temperatursensor kann ein Thermofühler, oder Thermistor, oder Infrarotsensor sein und ist zum Austausch von Temperaturdaten mit der Recheneinrichtung verbunden. Ein Anstieg der Temperatur der Sonotrode kann eine Herabsetzung der Frequenz der Sonotrode verursachen, was ein verfälschtes Errechnen des zumindest einen Kennwert verursachen kann. Es kann vorkommen, dass die Frequenz der Sonotrode abnimmt, wenn die Temperatur der Sonotrode ansteigt. Somit ist die Frequenz der Sonotrode zu Beginn der Erzeugung der Schweissverbindung höher als an dem Ende. Das Einbeziehen dieser Temperaturabhängigkeit zumindest im Schritt a) verbessert das Überprüfen der Qualität der Ultraschallschweissverbindung.

Vorzugsweise wird zumindest eine Verschleisserscheinung der zumindest einen Komponente der Ultraschallschweissvorrichtung mithilfe der Schwingungssignale erkannt. Dabei kann die zumindest eine Komponente das Schweisswerkzeug, die Sonotrode, umfassen. Eine Sonotrode ermöglicht typischerweise 100.000 Schweissungen, wobei die Zuverlässigkeit der Schweissverbindung am Werkstück mit steigender Anzahl der Schweissverbindungsherstellung abnimmt. Es hat sich jedoch gezeigt, dass basierend der hier vorgenannten Auswertung eine Voraussage der Effizienz des Schweisswerkzeugs möglich ist, da sich der Vergleich des zumindest einen Kennwerts mit zumindest einem Referenzwert in der Recheneinrichtung im Schritt f) signifikant verändert. Beispielsweise nimmt die zuvor genannte Analysekurve einen untypischen Verlauf an, wobei sich die Steigung und/oder die Absolutwerte der Analysekurve signifikant verändern, insbesondere abfallen. Somit ist es möglich, einen Sonotrodenwechsel an der Ultraschallschweissvorrichtung frühzeitig zu planen, sodass somit ein ungeplanter Ausfall der Ultraschallschweissvorrichtung vermeidbar ist.

Das zuvor beschriebene Verfahren zum Überprüfen der Qualität zumindest einer Ultraschallschweissverbindung an einem Werkstück kann ein computerimplementiertes Verfahren sein, wobei die Recheneinrichtung ein Computer ist, der zumindest einen Rechenprozessor und eine Speichereinrichtung umfasst. Damit ist eine verbesserte, lückenfreie Echtzeitüberprüfung der Qualität zumindest einer Ultraschallschweissverbindung an dem Werkstück möglich.

Eine erfindungsgemässe Messvorrichtung zum Überprüfen der Qualität zumindest einer Ultraschallschweissverbindung an einem Werkstück, während dem Erzeugen der Ultraschallschweissverbindung umfasst zumindest eine Schwingungsaufnahmeeinrichtung zum Detektieren von Schwingungssignalen und eine Recheneinrichtung zum Vergleichen zumindest eines Kennwerts mit zumindest einem Referenzwert, wobei die Recheneinrichtung eine Anzeigeeinrichtung veranlasst, eine für die Qualität der Ultraschallschweissverbindung indikative Information basierend auf dem Vergleich des zumindest einen Kennwerts mit dem zumindest einem Referenzwert anzuzeigen. Insbesondere ist mit der Messvorrichtung ein zuvor beschriebenes Verfahren ausführbar. Damit kann das Arbeitsverhalten einer Ultraschallschweissvorrichtung kontinuierlich und automatisch, in Echtzeit, überprüft und gegebenenfalls gesteuert werden, wodurch eine verbesserte Qualitätsbestimmung der Haltekraft der Ultraschallschweissverbindung gewährleisten ist. Die zumindest eine Schwingungsaufnahmeeinrichtung ist ausgebildet Schwingungssignale zu detektieren. Die bevorzugt kontinuierlich detektierten Schwingungssignale können Luftschallsignale oder Körperschallsignale umfassen oder aus Strom- oder Spannungsmessungen zumindest eines Piezoaktuators resultieren. Die Schwingungssignale können mit geeigneten Analog-Digital-Wandlern abgetastet und in digitale Signalwerte, beispielsweise Amplitudenwerte oder Frequenzwerte, übersetzt werden, die der Recheneinrichtung zur Verfügung gestellt werden und in einer Speichereinrichtung übertragen und gespeichert werden. Die Recheneinrichtung ist ausgebildet, zumindest einen Kennwert auf Basis des zumindest einen Signalblocks der elektrischen Messsignale zu errechnen und den zumindest einen Kennwert mit zumindest einem Referenzwert zu vergleichen. Die Speichereinrichtung ist mit der Recheneinrichtung zum Austausch von Daten verbunden. Die Recheneinrichtung steht in Kommunikation mit Sensoren, welche Schwingungssignale der Ultraschallschweissvorrichtung sowie des Werkstücks aufzeichnen. Dies können luftgekoppelte akustische Sensoren, aber auch andere Sensoren, wie Körperschallsensoren oder Strom-/Spanungssensoren sein, die geeignet sind, das Schwingungsverhalten des zuvor beschriebenen mechanischen Systems zu charakterisieren. Ebenso ist es möglich mehrere dieser Sensoren gemeinsam zu nutzen und deren Sensorsignale gemeinsam auszuwerten, um die für die Qualität der Schweissverbindung indikative Information zu bestimmen. Zusätzliche Sensoren können Parameter, wie etwa die Temperatur der Sonotrode aufzeichnen. Die Sensoren sind mit der Recheneinrichtung zum Austausch von Sensordaten verbunden. Die Aufzeichnung der Sensordaten kann durch ein elektrisches Signal gestartet werden, das dem Einschalten des Generators der Ultraschallschweissvorrichtung entspricht.

Vorzugsweise ist die Schwingungsaufnahmeeinrichtung ein Mikrofon, sodass die akustischen Luftschallsignale verbessert detektierbar sind. Ein Mikrofon kann auch beabstandet von der Sonotrode in der Nähe des Werkstücks positioniert werden, sodass das Herstellen der Ultraschallschweissverbindung nicht gestört ist. Insbesondere ist das Mikrofon ein optisches Mikrofon ohne Membran. Ein optisches Mikrofon ohne Membran eignet sich besonders gut als Schwingungsaufnahmeeinrichtung, da es keine mechanisch bewegbaren Bauteile aufweist und daher resonanzfrei ist. Es ist somit von den Schwingungen der Ultraschallvorrichtung unbeeinflusst. Auf eine Membran wird im optischen Mikrofon verzichtet. Das optische Mikrofon umfasst im Wesentlichen zwei parallele Spiegel, zwischen denen bei betriebsmässiger Verwendung des optischen Mikrofons ein Laserstrahl in Interferenzbedingungen angeordnet ist. Die zwischen den beiden parallelen Spiegeln ankommenden Schwingungssignale, welche von dem zuvor beschriebenen mechanischen Schwingkreis, bestehend aus zumindest der Sonotrode und dem Werkstück, während des Ultraschallschweissprozesses ausgesendet werden, wechselwirken mit dem Laserstrahl, wobei aufgrund der Wechselwirkung der Schwingungssignale mit dem Laserstrahl eine Änderung des Brechungsindex im schallausbreitenden Medium zwischen den beiden Spiegeln verursacht wird. Diese Änderung bzw. die Wechselwirkung wird in die elektrischen Messsignale umgewandelt und detektiert. Die elektrischen Messsignale werden weiterverarbeitet, wie zuvor beschrieben. Das optische Mikrofon ist unempfindlich gegenüber elektromagnetischen Störfeldern, welche beispielsweise durch die Schweissvorrichtung in hohem Masse erzeugt werden. Darüber hinaus ist das optische Mikrofon stabil gegenüber extrem hohen Schalldrücken, welche natürlich vorhanden sind, wenn man Metall mittels Schallwellen schweisst. Beide Bedingungen liegen beim Ultraschallschweissen vor, und sind gleichzeitig Stärken des optischen Mikrofons aber auch Schwächen von herkömmlichen Sensoren.

Insbesondere ist das optische Mikrofon ausgebildet, zumindest zwei Schwingungssignale während dem Erzeugen der Ultraschallschweissverbindung zu detektieren. Die Schwingungssignale bzw. die akustischen Signale, welches für die Überwachung der Qualität des Schweissprozesses massgeblich sind, werden typischerweise an verschiedenen Positionen und in verschiedene Richtungen von der zumindest einen Komponente der Ultraschallschweissvorrichtung und dem zumindest einem Werkstück abgestrahlt. Diese Positionen liegen einige 10-Zentimeter auseinander, im Bereich der Sonotrode. Für eine stabile und verlässliche Qualitätsüberwachung des Schweissvorganges ist es essentiell, dass die gesamten Schwingungssignale bzw. die gesamte Akustik gleichzeitig überwacht werden. Da sich der Luftschall und damit die Schwingungssignale typischerweise überlagern bzw. eine Superposition vorliegt, kann somit ein einziges optisches Mikrofon in einem einzigen Bereich bzw. an einer einzigen Position in unmittelbarer Umgebung der Ultraschallschweisseinrichtung den gesamten Prozess überwachen.

Alternativ ist die Schwingungsaufnahmeeinrichtung zumindest ein piezoelektrischer Schwingungsaufnehmer. Dabei werden die Strom- und/oder Spannungssignale am piezoelektrischen Kristall in die elektrischen Messsignale umgewandelt, und wie zu vor beschrieben, weiterverarbeitet.

Alternativ ist die Schwingungsaufnahmeeinrichtung zumindest ein kapazitiver Schwingungsaufnehmer (Kondensatormikrofon, Elektret Mikrofon) bei dem eine Änderung der elektrischen Kapazität in ein Spannungssignal umgesetzt wird.

Alternativ ist die Schwingungsaufnahmeeinrichtung zumindest ein induktiver Schwingungsaufnehmer (dynamisches Mikrofon) bei dem die Änderung eines Magnetfelds in ein Strom- bzw. Spannungssignal umgesetzt wird.

Alternativ ist die Schwingungsaufnahmeeinrichtung zumindest eine Köperschallmesseinrichtung. Dabei werden die Körperschallsignale in die elektrischen Messsignale umgewandelt, und wie zu vor beschrieben, weiterverarbeitet.

In einer weiteren Ausführungsform ist zumindest eine Steuereinrichtung vorhanden, die mit der zumindest einen Recheneinrichtung verbunden ist und die zum Austausch von Signaldaten und Befehlsdaten zumindest mit der Schwingungsaufnahmeeinrichtung verbunden sind. Damit ist die Schwingungsaufnahmeeinrichtung direkt in der Messvorrichtung steuerbar. Insbesondere erstellt eine Recheneinrichtung Steuerdaten für eine Steuereinrichtung der Ultraschallschweissvorrichtung, wobei die Steuerdaten den Weitertransport des Werkstücks steuern können. Beispielsweise kann die Recheneinrichtung die Steuereinrichtung der Ultraschallschweissvorrichtung veranlassen, eine Werkstücktransporteinrichtung der Ultraschallschweissvorrichtung derart zu steuern, dass ein nOK-Werkstück ausgeworfen wird und somit im weiteren Verarbeitungsprozess nicht mehr verwendet wird. Somit werden Ressourcen gespart.

Insbesondere kann die Recheneinrichtung veranlassen, ein nOK-Werkstück mit einer Markierungseinrichtung, beispielsweise mit einer Stanzeinrichtung, zu markieren, sodass dieses im weiteren Verarbeitungsprozess nicht mehr verwendet wird. Alternativ oder ergänzend kann die Recheneinrichtung veranlassen, ein nOK-Werkstück digital in einem Register der Recheneinrichtung zu kennzeichnen, sodass dieses im weiteren Verarbeitungsprozess nicht mehr verwendet wird. Somit werden weitere Ressourcen gespart.

Vorzugsweise stellt die Steuereinrichtung Befehlsdaten für die Recheneinrichtung bereit, um die indikative Information an der Anzeigeeinrichtung auszugeben. Die Recheneinrichtung kann während oder nach dem Überprüfen die Anzeigeeinrichtung veranlassen, das Warnsignal, das für ein nOK-Werkstück oder ein OK-Werkstück steht, anzuzeigen, damit kann ein Benutzer die Qualität der Schweissverbindung sofort erkennen.

Bevorzugt umfasst der zumindest eine Kennwert zumindest einen Schwankungswert eines Fertigungsprozesses. Häufig sind industrielle Fertigungsprozesse zwei verschiedenen Variationen der Fertigungsqualität unterworfen: Einen kurzfristigen, statistischen Schwankungswert, sowie einem langfristigen Trendwert. Der kurzfristige Schwankungswert umfasst die normale Produktion von Produkten, die mehrheitlich Gutprodukte hervorbringt, und zu einem kleinen Teil (z.B. im Prozentbereich, oder im ppm-Bereich) Schlechtprodukte. Der zweite Schwankungswert, in der Form eines längerfristigen Trends meint, dass es Tage gibt, wo weniger Schlechtprodukte hervorgebracht werden, und andere Tage, wo mehr Schlechtprodukte hervorgebracht werden. So ein langfristiger Trend kann zum Beispiel durch eine verschlissene Sonotrode, einen Ermüdungsprozess in der Ultraschallvorrichtung, einem mechanischen Abnützungsprozess der Auflage, aber auch durch äussere Umstände wie Raumtemperatur oder Luftdruck, -Feuchte usw. verursacht werden. Der langfristige Trend äussert sich durch eine scheinbar gehäuft auftretende Vorkommnis von nOK-Ereignissen. Dieses a-priori bekannte Wissen kann man sich in der Bestimmung des zumindest einen Kennwerts zu Nutze machen, indem eine OK-nOK Schwelle dynamisch verschoben wird, je nach Häufigkeit der Anzahl nOK Vorkommnisse innerhalb einer Historie der vergangen 20 oder 100 Schweissungen. Die Anzahl der betrachteten, zurückliegenden Ereignissen kann auch kleiner sein, zum Beispiel die letzten 3 Schweißungen umfassen, oder auch viel grösser sein, und zum Beispiel die letzten 10,000 Schweißungen umfassen. Die Erweiterung der Auswertesoftware um dieses hier beschriebene Modul hat zur Folge, dass sich die Trennschärfe zwischen OK und nOK verbessern lässt, was für den Anwender grosse Bedeutung haben kann. Ferner kann auch die Trefferverhältnis (die richtige Erkennung von nOK Teilen) verbessert sowie die Falsch-Richtig-Verhältnis (das fälschliche Deklarieren von OK Teil als nOK Teil) reduziert werden, was ebenfalls vorteilhaft ist.

Ein erfindungsgemässes Computerprogramm, umfasst Befehle, die bei einer Ausführung des Computerprogramms durch einen Computer, den Computer dazu veranlassen, ein zuvor beschriebenes Verfahren auszuführen.

Ein erfindungsgemässes computerlesbares Medium umfasst computerlesbare Anweisungen bzw. Befehle, die bei der Ausführung durch einen Computer diesen veranlassen, ein zuvor beschriebenes Verfahren durchzuführen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Mittels der nachfolgenden Figuren wird anhand von Ausführungsbeispielen die Erfindung näher erläutert. Die Bezugszeichenliste ist Bestandteil der Offenbarung.

Positionsangaben, wie "oben", unten", "rechts" oder "links" sind jeweils auf die entsprechenden Darstellungen bezogen und sind nicht als einschränkend zu verstehen.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend zu verschiedenen Aspekten und/oder Ausführungsformen genannt oder gezeigt sind.

Die Erfindung umfasst ebenfalls einzelne Merkmale in den Figuren, auch wenn sie dort im Zusammenhang mit anderen Merkmalen gezeigt sind und/oder vorstehend nicht genannt sind. Im Weiteren schliesst der Ausdruck "umfassen" und Ableitungen davon andere Elemente oder Schritte nicht aus. Ebenfalls schliesst der unbestimmte Artikel "ein" beziehungsweise "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Ansprüchen sind nicht als den Umfang der Ansprüche einschränkend zu verstehen.

### Figurenbeschreibung

Die Figuren werden zusammenhängend und übergreifend beschrieben. Gleiche Bezugszeichen bedeuten gleiche Bauteile. Es zeigen
Fig. 1: ein erstes erfindungsgemässes Verfahren zum Überprüfen der Qualität zumindest einer Ultraschallschweissverbindung an einem Werkstück;
Fig. 2: ein Schwingungssignal, welches von einer Schwingungsaufnahmeeinrichtung detektiert wird;
Fig. 3: einen Signalblock, welcher von der Recheneinrichtung berechnet wird;
Fig. 4: ein weiteres erfindungsgemässes Verfahren zum Überprüfen der Qualität zumindest einer Ultraschallschweissverbindung an einem Werkstück;
Fig. 5: ein weiteres erfindungsgemässes Verfahren zum Überprüfen der Qualität zumindest einer Ultraschallschweissverbindung an einem Werkstück;
Fig. 6: eine erfindungsgemässe Vorrichtung zum Überprüfen der Qualität zumindest einer Ultraschallschweissverbindung an einem Werkstück mit einem optischen Mikrofon als Schwingungsaufnahmeeinrichtung und mit einer Ultraschallschweissvorrichtung in einer schematischen Darstellung;
Fig. 7: eine weitere erfindungsgemässe Vorrichtung zum Überprüfen der Qualität zumindest einer Ultraschallschweissverbindung an einem Werkstück mit einer Körperschalleinrichtung als Schwingungsaufnahmeeinrichtung und mit einer Ultraschallschweissvorrichtung in einer schematischen Darstellung;
Fig. 8: eine weitere erfindungsgemässe Vorrichtung zum Überprüfen der Qualität zumindest einer Ultraschallschweissverbindung an einem Werkstück mit einem Piezoaktuator als Schwingungsaufnahmeeinrichtung und mit einer Ultraschallschweissvorrichtung in einer schematischen Darstellung; und
Fig. 9: eine erfindungsgemässe Vorrichtung gemäss Fig. 6 bis Fig. 8 ohne Schwingungsaufnahmeeinrichtung in einer schematischen Darstellung.

### Ausführung der Erfindung

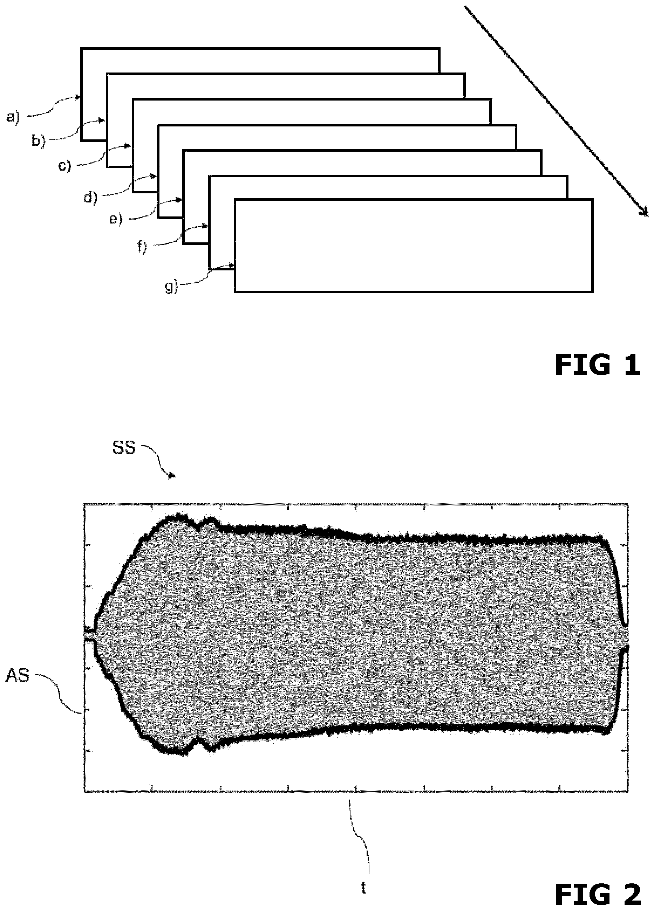

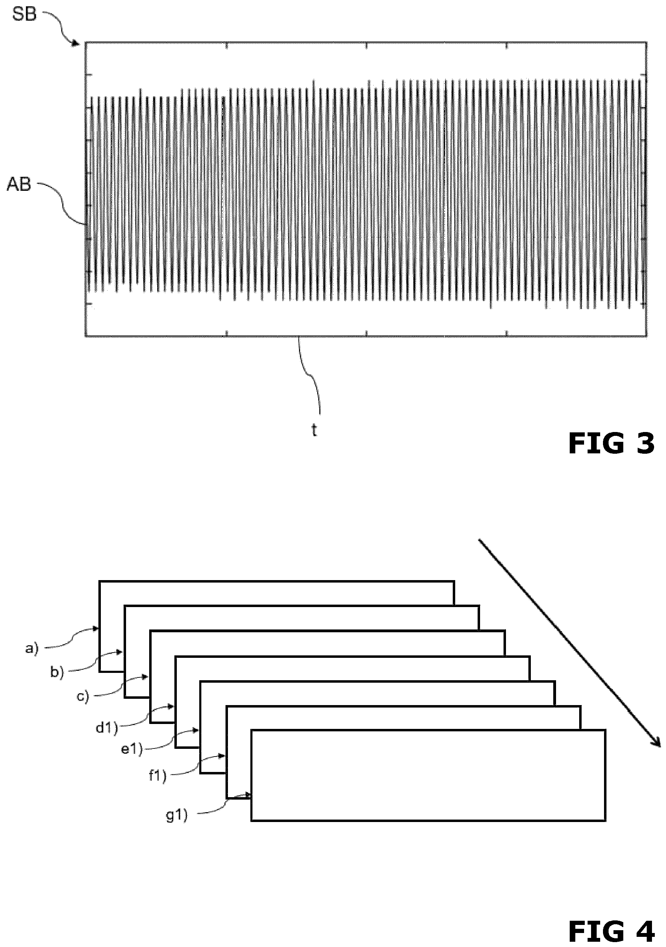

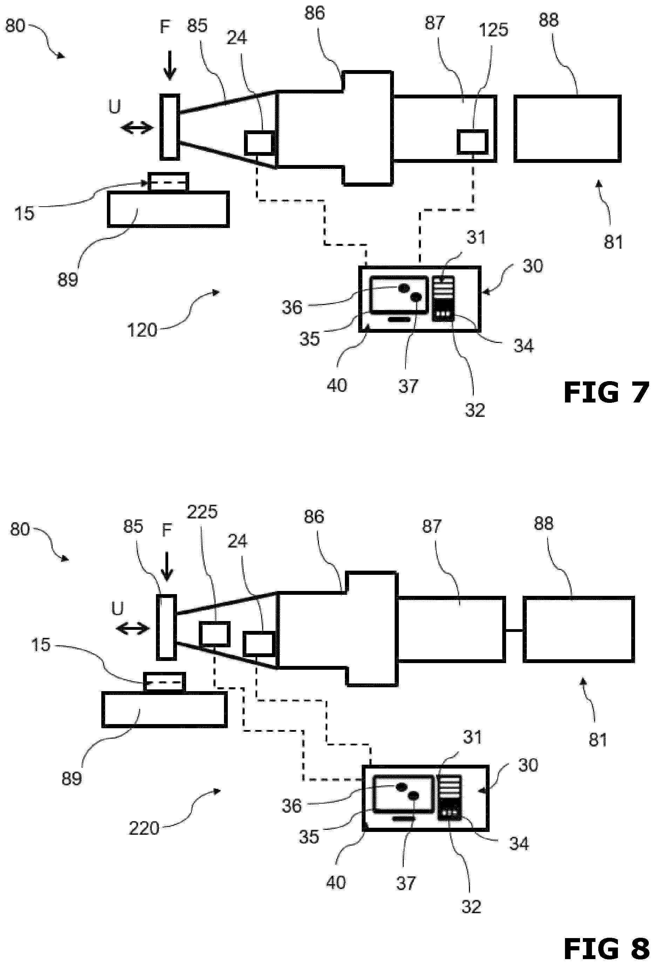

Figuren 1 bis 3 zeigen eine erste Ausführungsform des erfindungsgemässen Verfahrens zum Überprüfen der Qualität zumindest einer Ultraschallschweissverbindung während dem Erzeugen der Ultraschallschweissverbindung an einem Werkstück 15, mit einer Schwingungsaufnahmeeinrichtung 21, und einer Recheneinrichtung 30. Dabei wird hinsichtlich einzelner Merkmale auf eine erfindungsgemässe Messvorrichtung 20 gemäss der Figur 7 verwiesen, um das nachfolgende Verfahren anschaulich zu beschreiben. Das Verfahren umfasst zumindest die folgenden Schritte:
a) Detektieren von Schwingungssignalen SS mit der zumindest einen Schwingungsaufnahmeeinrichtung 21, wobei die Schwingungssignale SS von der Sonotrode 85 einer Ultraschallschweissvorrichtung 80 und dem Werkstück 15 beeinflusst werden, und neben dem Grundsignal der Schwingungssignale SS, auch die Höherharmonischen der Schwingungssignale SS detektiert werden - siehe das Schwingungssignal SS in Figur 2;
b) Erzeugen von elektrischen Messsignale EM in der Schwingungsaufnahmeeinrichtung 21 auf Basis der detektierten Schwingungssignale SS;
c) Übermitteln der elektrischen Messsignale EM an die Recheneinrichtung 30;
d) Bearbeiten zumindest eines Signalblocks SB der elektrischen Messsignale EM in der Recheneinrichtung 30 - siehe einen Signalblock SB in Figur 3;
e) Errechnen zumindest eines Kennwerts auf Basis des zumindest einen Signalblocks SB der elektrischen Messsignale EM;
f) Vergleichen des zumindest einen Kennwerts mit zumindest einem Referenzwert in der Recheneinrichtung 30;
g) Bestimmen einer für die Qualität der Ultraschallschweissverbindung indikative Information (OK, nOK) basierend auf dem Vergleich des zumindest einen Kennwerts mit dem zumindest einem Referenzwert.

Eine Ultraschallschweissvorrichtung 80 umfasst typischerweise einen Konverter 87 und eine Sonotrode 85. Für das vorliegende Verfahren bildet die Sonotrode 85 zusammen mit dem Werkstück 15 ein mechanisches Schwingungssystem, welches eine Verschiebung der Grundfrequenz und der Harmonischen der Schwingungssignale SS (typischerweise 20 kHz sowie Vielfache) bewirkt. In Schritt e) wird diese Verschiebung, berücksichtigt, um den zumindest einen Kennwert zu bestimmen.

Zur Berechnung des Kennwerts aus Schritt e) kann das Messsignal einer Hilbert Transformation unterworfen werden. Eine weitere Möglichkeit ist die Nutzung der Koeffizienten einer Cepstrum Transformation aber auch eine Continous Wavelet Transformation.

Figur 2 zeigt einen zeitlichen Verlauf des Hauptschalls des Schwingungssignals SS, welches mit der Schwingungssignaleinrichtung 21 detektiert wird. Auf der Abszisse ist die Zeit t angezeigt und auf der Ordinate die Auslenkung AS des Schwingungssignals SS. Die Auslenkung kann die Amplitude oder die Frequenz des Schwingungssignals SS sein.

Im Schritt b) werden die übermittelten elektrischen Messsignale EM mithilfe der Recheneinrichtung 30 zeitlich abgetastet und die Polarität der elektrischen Messsignale EM in der Recheneinrichtung 30 ausgewertet. Dabei werden die elektrischen Messsignale EM je nach Polarität in binäre Signale, in >0 oder <=0, unterteilt.

Aus dem so gewonnenen Rechtecksignal können Eigenschaften, wie die Anzahl der Nulldurchgänge je Zeiteinheit oder eine statistische Auswertung der Periodendauer leicht abgeleitet werden. Solche Eigenschaften sind auch sehrt gut als Eingangsgrößen für das KI-Modul zu nutzen.

Figur 3 zeigt einen zeitlichen Verlauf eines Signalblocks SB. Auf der Abszisse ist die Zeit t angezeigt und auf der Ordinate die Auslenkung AB des Signalblocks SB. Die Auslenkung kann die Amplitude oder die Frequenz des Signalblocks SB sein, je nachdem, welches Signal in der Recheneinrichtung ausgewertet werden soll - hier vorliegend die Frequenz.

Im Schritt c) werden die elektrischen Messsingale EM in bis zu zwei Duzend Signalblöcke SB unterteilt, wobei die Signallänge der einzelnen Signalblöcke SB weniger als 100ms beträgt.

Im Schritt d) wird eine Fouriertransformation (FT) mit den Signalblöcken SB durchgeführt. Dabei wird der zumindest eine Signalblock SB in seine Bestandteile zerlegt. Diese Bestandteile können einzelne Sinus-Schwingung bei diskreten Frequenzen sein, deren Amplitude und Phase bestimmt werden. Die erzeugten FT-Koeffizienten des transformierten Schwingungssignals werden zur Gewinnung von Merkmalsvektoren herangezogen, die als Basis für Machine-Learning-Algorithmen in KI (künstliche Intelligenz) Modul 31 in der Recheneinrichtung 30 dienen. Das KI-Modul 31 kann anschliessend den zumindest einen Kennwert errechnen. Das KI-Modul 31 kann ein neuronales Netzwerk umfassen oder eine Support Vector Machine oder eine Transformer-Recheneinheit umfassen.

Im Schritt d) werden zusätzlich die Höherharmonischen der Schwingungssignale SS bearbeitet. Damit kann nicht nur das Grundsignal der Schwingungssignale SS in der FT oder im KI-Modul 31 bearbeitet werden, sondern auch deren Höherharmonische, sodass eine hohe Datenmenge basierend auf den Schwingungssignalen SS auswertbar ist.

Nach dem Schritt g) erfolgt eine Ausgabe zumindest eines Warnsignals WS. Als Warnsignal WS ist ein visuelles Warnsignal vWS vorgesehen, welches an einer Anzeigeeinrichtung 35 mittels eines Lichtsignals 36 angezeigt wird. Damit kann ein OK-Werkstück oder ein nOK-Werkstück in Echtzeit überprüft werden und das Ergebnis einem Benutzer unmittelbar mitgeteilt werden. Alternativ oder ergänzend ist auch ein akustisches Warnsignal aWS an der Anzeigeeinrichtung 35 über einen Lautsprecher 37 ausgegeben.

Das zuvor beschriebene Verfahren zum Überprüfen der Qualität zumindest einer Ultraschallschweissverbindung während dem Erzeugen der Ultraschallschweissverbindung an einem Werkstück 15, wird an einer Ultraschallschweissvorrichtung 80 an mehreren Werkstücken 15 durchgeführt, wobei die Werkstücke 15 an einer Werkstücktransporteinrichtung 89 angeordnet sind und hintereinander an die Sonotrode 85 herangeführt werden, sowie nach dem Schweissvorgang weitertransportiert werden.

Figur 4 zeigt eine weitere Ausführungsform des erfindungsgemässen Verfahrens, zum Überprüfen der Qualität zumindest einer Ultraschallschweissverbindung während dem Erzeugen der Ultraschallschweissverbindung am Werkstück 15, wobei die Schritte a) bis c) den Schritten gemäss dem Verfahren der Figur 1 bis Figur 3 entsprechen und zumindest die nachfolgenden Schritte d1) bis g1) alternativ zu den Schritten d) bis g) vorgesehen sind:
d1) Bearbeiten zumindest eines Signalblocks SB der elektrischen Messsignale EM in der Recheneinrichtung - siehe einen Signalblock SB in Figur 3;
e1) Errechnen zumindest eines Kennwerts auf Basis des zumindest einen Signalblocks SB der elektrischen Messsignale EM;
f1) Vergleichen des zumindest einen Kennwerts mit zumindest einem Referenzwert in der Recheneinrichtung 30;
g1) Bestimmen einer für die Qualität der Ultraschallschweissverbindung indikative Information basierend auf dem Vergleich des zumindest einen Kennwerts mit dem zumindest einem Referenzwert.

Im Schritt d1) wird der zumindest eine Signalblock SB dem KI-Modul 31 übermittelt. Dabei wird der zumindest eine Signalblock SB zur Gewinnung von Merkmalsvektoren herangezogen, die als Basis für Machine-Learning-Algorithmen im KI Modul 31 dienen. Das KI-Modul 31 errechnet anschliessend den zumindest einen Kennwert. Dabei werden Referenzmessungen zu Schweissverbindungen von OK-Werkstücken erstellt und als Kl-Trainingsdaten dem KI-Modul 31 zur Verfügung gestellt. Wird hierbei klassifizierendes Maschinelles-Lernen eingesetzt und für eine Zahl an Referenzmessungen (mit guter und verringerter Ablösekraft) an den Werkstücken 15 ein zerstörender Abzugstest vorgenommen, so ist es möglich mit dem so erhaltenen Trainingsdaten ein Modell zu trainieren. Damit wird für weitere Schwingungssignale SS vorhergesagt, ob die Abzugskraft über oder unter einem vorgegebenen Schwellwert zu liegen kommt. Das KI-Modul 31 kann somit wesentliche Parameter zur Beurteilung von OK- oder nOK-Werkstücke liefern. Das KI Modul liefert als Ausgang einen Zahlenwert, der schätzt, wie weit eine Messung im OK (größer Null) oder NOK Bereich (kleiner Null) ist. Durch Addition oder Subtraktion eines Offsets kann die Entscheidungsschwelle verschoben werden, um das System bei bereits trainiertem Modell toleranter oder empfindlicher einzustellen.

Es ist ein Toleranzbereich im Vergleich vorgesehen, sodass mehrere OK-Werkstücke weiterverwendbar sind. Der Toleranzbereich umfasst bis zu 10% Toleranz im Vergleich des zumindest einen Kennwerts mit dem Referenzwert, sodass Werkstücke 15 mit bis zu einer 10%igen Abweichung (Toleranz) im zuvor beschriebenen Vergleich noch als OK-Werkstücke weiterverwendbar sind.

Im Schritt d1) werden die Höherharmonischen der Schwingungssignale SS bearbeitet. Damit kann nicht nur das Grundsignal der Schwingungssignale in der FT oder im Kl-Modul 31 bearbeitet werden, sondern auch deren Höherharmonischen, sodass eine hohe Datenmenge basierend auf den Schwingungssignalen auswertbar ist.

Nach dem Schritt g1) erfolgt eine Ausgabe zumindest eines Warnsignals WS. Als Warnsignal WS ist ein akustisches Warnsignal aWS vorgesehen, welches an einer Anzeigeeinrichtung 35 mittels eines Lautsprechers 37 angezeigt wird. Damit kann ein OK-Werkstück oder ein nOK-Werkstück in Echtzeit überprüft werden und das Ergebnis einem Benutzer unmittelbar mitgeteilt werden. Alternativ oder ergänzend wird auch ein visuelles Warnsignal vWS an der Anzeigeeinrichtung 35 über ein Lichtsignal 36 ausgegeben.

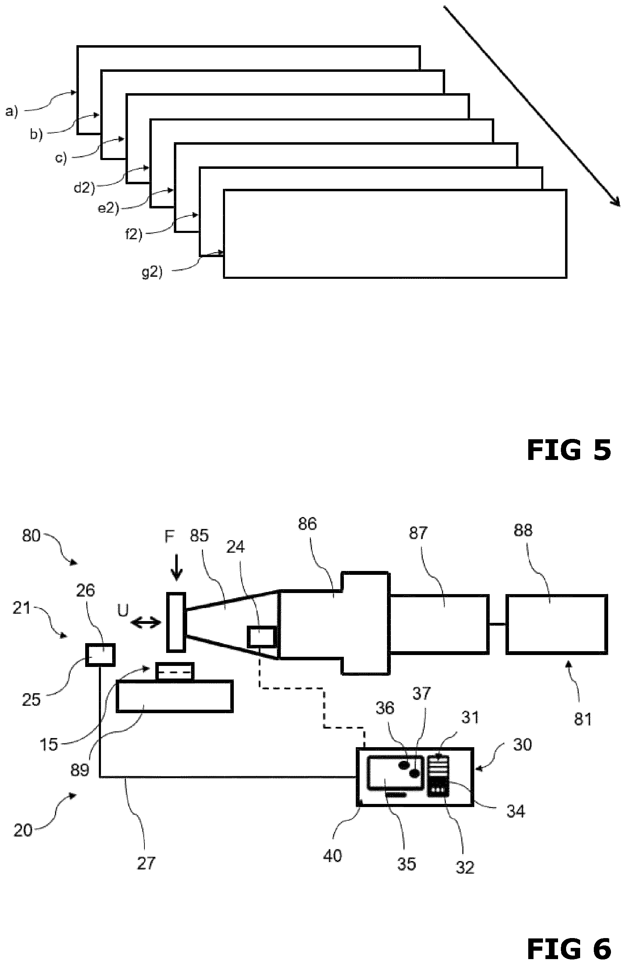

Figur 5 zeigt eine weitere Ausführungsform des erfindungsgemässen Verfahrens, zum Überprüfen der Qualität zumindest einer Ultraschallschweissverbindung während dem Erzeugen der Ultraschallschweissverbindung an einem Werkstück 15, wobei die Schritte a) bis c) den Schritten gemäss dem Verfahren der Figur 1 bis Figur 3 entsprechen und zumindest die nachfolgenden Schritte d2) bis g2) alternativ zu den Schritten d) bis g) vorgesehen sind:
d2) Bearbeiten zumindest eines Signalblocks SB der elektrischen Messsignale EM in der Recheneinrichtung 30 - siehe einen Signalblock SB in Figur 3;
e2) Errechnen zumindest eines Kennwerts auf Basis des zumindest einen Signalblocks SB der elektrischen Messsignale EM;
f2) Vergleichen des zumindest einen Kennwerts mit zumindest einem Referenzwert in der Recheneinrichtung;
g2) Bestimmen einer für die Qualität der Ultraschallschweissverbindung indikative Information basierend auf dem Vergleich des zumindest einen Kennwerts mit dem zumindest einem Referenzwert.

Im Schritt d2) wird eine Fouriertransformation (FT) mit den Signalblöcken durchgeführt. Dabei wird der zumindest eine Signalblock SB in seine Bestandteile zerlegt. Diese Bestandteile können einzelne Sinus-Schwingung bei diskreten Frequenzen sein, deren Amplitude und Phase bestimmt werden. Ein oder mehrere Maximalwerte werden im transformierten Signalblock erfasst, um diese insbesondere entweder einzeln in der Recheneinrichtung 30 weiterzuverwenden oder dem KI-Modul 31 als Trainingsdaten zur Verfügung stellen zu können. Dabei wird in der näheren Umgebung (um ein Delta) eines Signalblockwerts SB des transformierten Signalbocks ein Maximum gesucht. Im Schritt d3) werden zusätzlich die Höherharmonischen der Schwingungssignale SS bearbeitet.

Anschliessend wird eine Analysekurve auf Basis des transformierten Signalblocks erzeugt. Die Analysekurve stellt eine charakteristische Kurve des transformierten Signalblocks dar. Danach erfolgt das Erzeugen einer Differenzkurve zwischen der Analysekurve und einer ersten Referenzkurve. Dabei kann die erste Referenzkurve Daten einer vorab erstellten Ultraschweissverbindung eines OK-Werkstücks umfassen, sodass die Differenzkurve Differenzwerte um Null aufweisen sollte, wenn das aktuell überprüfte Werkstück OK ist.

Anschliessend wird der zumindest eine Kennwert mithilfe der Differenzkurve erstellt, wobei eine Entscheidungsschwelle gesetzt wird, bei deren Überschreitung die Schweissung als nOK-Werkstück bzw. fehlerhaft qualifiziert wird oder beim Unterschreiten als OK-Werkstück bzw. fehlerfrei qualifiziert wird.

In den zuvor beschriebenen Verfahren gemäss den Figuren 1 bis 5 wird eine Temperaturabhängigkeit der detektierten Schwingungssingale zumindest in den Schritten g), g1) und g2) miteinbezogen, wobei die Temperatur mit einem Temperatursensor 24 gemessen wird und an die Recheneinrichtung 30 übermittelt wird. Dabei kann der Temperatureinfluss der aktuellen Schweissung anhand eine Lookup-Tabelle mit Temperaturreferenzwerten in der Recheneinrichtung 30 verglichen werden und in der Berechnung des Kennwerts einfliessen.

In den zuvor beschriebenen Verfahren gemäss den Figuren 1 bis 5 wird eine Verschleisserscheinung der Sonotrode 85 der Ultraschallschweissvorrichtung 80 mithilfe der Schwingungssignale SS erkannt. Es hat sich gezeigt, dass basierend der hier vorgenannten Auswertungen eine Voraussage der Effizienz der Sonotrode 85 möglich ist, da sich der Vergleich des zumindest einen Kennwert mit zumindest einem Referenzwert in der Recheneinrichtung 30 in den Schritten f1), f2) oder f3) signifikant verändert. Beispielsweise analysiert das KI-Modul 31 abweichende Kennwerte oder die zuvor genannte Analysekurve nimmt einen ungewünschten Verlauf an, wobei sich die Steigung und/oder die Absolutwerte der Analysekurve signifikant verändern, insbesondere abfallen. Diese Änderungen sind unterschiedlich zu den Werten der Analysekurven oder unterschiedlich zu den Kennwerten eines nOK-Werkstücks, sodass die Verschleisserscheinung an der Sonotrode 85 erkennbar ist. Somit ist es möglich, einen Sonotrodenwechsel an der Ultraschallschweissvorrichtung 80 frühzeitig zu planen, sodass somit ein ungeplanter Ausfall der Ultraschallschweissvorrichtung 80 vermeidbar ist.

Die kontinuierlich detektierten Schwingungssignale SS in den zuvor beschriebenen Verfahren können, je Ausführungsform und je nach eingesetzter Schwingungsaufnahmeeinrichtung 21 Luftschallsignale oder Körperschallsignale umfassen oder aus Strom- oder Spannungsmessungen zumindest eines Piezoaktuators resultieren.

Figur 6 zeigt eine erste Ausführungsform der erfindungsgemässen Messvorrichtung 20 zum Überprüfen der Qualität zumindest einer Ultraschallschweissverbindung an einem Werkstück 15, während dem Erzeugen der Ultraschallschweissverbindung. Die Messvorrichtung 20 umfasst zumindest ein optisches Mikrofon 25 als Schwingungsaufnahmeeinrichtung 21 und eine Recheneinrichtung 30, wobei die Recheneinrichtung 30 eine Anzeigeeinrichtung 35 veranlasst, eine für die Qualität der Ultraschallschweissverbindung indikative Information OK, nOK anzuzeigen. Die Messvorrichtung 20 führt eines der zuvor beschriebenen Verfahren gemäss den Figuren 1 bis 5 aus.

Das optische Mikrofon 25 ist ausgebildet, zumindest zwei bzw. alle Schwingungssignale SS während dem Erzeugen der Ultraschallschweissverbindung zu detektieren. Da sich der Luftschall und damit die Schwingungssignale SS durcheinandermischen, kann somit ein einziges optisches Mikrofon 25 an einer einzigen Position in unmittelbarer Umgebung der Ultraschallschweisseinrichtung 80 den gesamten Schweissvorgang überwachen.

Die Ultraschallschweissvorrichtung 80 weist einen Amboss auf, an dem das ursprünglich zweiteilige Werkstück 15 angeordnet ist und eine Sonotrode 85, welche mit einer Anpresskraft F auf das Werkstück 15 gedrückt wird und normal zur Kraftwirkung der Anpresskraft F Ultraschallwellen U aussendet. Die Sonotrode 85 ist mithilfe eines Boosters 86 und dem Konverter 87 mit einem elektrischen Generator 88 verbunden und wird damit angetrieben.

Das optische Mikrofon 25 ist in unmittelbarer Nähe des Werkstücks 15 beabstandet von der Sonotrode 85 angeordnet, wobei die am optischen Mikrofon 25 detektierten Schwingungssignale SS akustische Luftschallsignale sind. Das optische Mikrofon 25 umfasst im Wesentlichen einen Detektionskopf 26 mit zwei parallelen Spiegeln, zwischen denen bei betriebsmässiger Verwendung des optischen Mikrofons 25 ein Laserstrahl L in Interferenzbedingungen angeordnet ist. Der Laserstrahl L wird mit einer Glasfaser 27 vom Detektionskopf 26 hin zur Recheneinrichtung 30 geleitet, um das Laserstrahlsignal weiterzuverarbeiten. Die zwischen den beiden parallelen Spiegeln ankommenden akustischen Luftschallsignale, welche von der Sonotrode 85 und dem Werkstück 15 während des Ultraschallschweissprozesses ausgesendet werden, wechselwirken mit dem Laserstrahl L, wobei aufgrund der Wechselwirkung der akustischen Luftschallsignale mit dem Laserstrahl L eine Änderung des Brechungsindex im schallausbreitenden Medium zwischen den beiden Spiegeln im Detektionskopf 26 verursachen wird. Die Laserstrahlsignale werden in elektrische Messsignale EM umgewandelt. Dabei werden diese mit geeigneten Analog-Digital-Wandlern abgetastet und in digitale Signalwerte, beispielsweise Amplitudenwerte oder Frequenzwerte, übersetzt, die an die Recheneinrichtung 30 und an eine Speichereinrichtung 34 übertragen und gespeichert werden.

Die elektrischen Messsignale EM werden weiterverarbeitet, wie zuvor beschrieben. Das optische Mikrofon 25 ist zum Austausch von Sensordaten und Steuerdaten mit der Recheneinrichtung 30 verbunden. Die Speichereinrichtung 34 ist mit der Recheneinrichtung 30 zum Austausch von Daten verbunden. In der Recheneinrichtung 30 werden die digitalen Signalwerte in ein binäres Signal übersetzt, indem eine Bewertung der Abtastwerte, in >0 oder <=0, vorgenommen wird.

An der Sonotrode 85 ist ein Temperatursensor 24 angeordnet, der die Temperatur der Sonotrode misst. Der Temperatursensor 24 ist mit der Recheneinrichtung 30 zum Austausch von Sensordaten elektrisch verbunden. Die Aufzeichnung der Sensordaten kann durch ein elektrisches Signal gestartet werden, das dem Einschalten des Generators 88 der Ultraschallschweissvorrichtung 80 entspricht.

Es ist eine Steuereinrichtung 40 vorhanden, die mit der zumindest einen Recheneinrichtung 30 verbunden ist und die zum Austausch von Signaldaten und Befehlsdaten zumindest mit dem optischen Mikrofon 25 verbunden ist. Die Recheneinrichtung 30 erstellt Steuerdaten für eine Steuereinrichtung 81 der Ultraschallschweissvorrichtung 80, wobei die Steuerdaten den Weitertransport des Werkstücks 15 an einer Werkstücktransporteinrichtung 89 steuern. Beispielsweise veranlasst die Recheneinrichtung 30 die Steuereinrichtung 81, die Werkstücktransporteinrichtung 89 derart zu steuern, dass ein nOK-Werkstück 15 ausgeworfen wird und somit im weiteren Verarbeitungsprozess nicht mehr verwendet wird.

Die Steuereinrichtung 40 stellt Befehlsdaten für die Recheneinrichtung 30 bereit, um die indikative Information an einer Anzeigeeinrichtung 35 auszugeben. Die Recheneinrichtung 30 veranlasst während oder nach dem Überprüfen des Werkstücks 15 die Anzeigeeinrichtung 35, ein wie zuvor beschriebenes Warnsignal WS, das für ein nOK-Werkstück oder ein OK-Werkstück steht, visuell und/oder akustisch anzuzeigen.

Figur 7 zeigt eine zweite Ausführungsform der erfindungsgemässen Messvorrichtung 120 zum Überprüfen der Qualität zumindest einer Ultraschallschweissverbindung an einem Werkstück 15, während dem Erzeugen der Ultraschallschweissverbindung. Die Messvorrichtung 120 umfasst zumindest einen Körperschallsensor 125 als Schwingungsaufnahmeeinrichtung 21 und eine Recheneinrichtung 30, wobei die Recheneinrichtung 30 eine Anzeigeeinrichtung 35 veranlasst, eine für die Qualität der Ultraschallschweissverbindung indikative Information OK, nOK anzuzeigen. Die Messvorrichtung 120 führt eines der zuvor beschriebenen Verfahren gemäss den Figuren 1 bis 5 aus.

Der Körperschallsensor 125 ist an der Sonotrode 85 angeordnet, wobei die am Körperschallsensor 125 detektierten Schwingungssignale SS mechanische Schwingungssignale sind. Dabei werden die Körperschallsignale in die elektrischen Messsignale EM umgewandelt, und wie in den vor beschrieben Verfahren, weiterverarbeitet.

Figur 8 zeigt eine weitere Ausführungsform der erfindungsgemässen Messvorrichtung 220 zum Überprüfen der Qualität zumindest einer Ultraschallschweissverbindung an einem Werkstück 15, während dem Erzeugen der Ultraschallschweissverbindung. Die Messvorrichtung 120 umfasst zumindest einen piezoelektrischen Sensor, oder einen kapazitiven Sensor, oder einen induktiven Sensor 225 als Schwingungsaufnahmeeinrichtung 21 und eine Recheneinrichtung 30, wobei die Recheneinrichtung 30 eine Anzeigeeinrichtung 35 veranlasst, eine für die Qualität der Ultraschallschweissverbindung indikative Information OK, nOK anzuzeigen. Die Messvorrichtung 220 führt eines der zuvor beschriebenen Verfahren gemäss den Figuren 1 bis 5 aus. Dabei werden die Strom- und/oder Spannungssignale am zumindest einen Sensor 225 in die elektrischen Messsignale EM umgewandelt, und wie in den vor beschrieben Verfahren, weiterverarbeitet.

Ebenso ist es in den zuvor beschriebenen Messvorrichtungen 20, 120, 220 möglich, mehrere gleiche oder unterschiedliche Schwingungsaufnahmeeinrichtungen 21 gemeinsam zu nutzen und deren Sensorsignale gemeinsam auszuwerten, um die für die Qualität der Schweissverbindung indikative Information zu bestimmen.

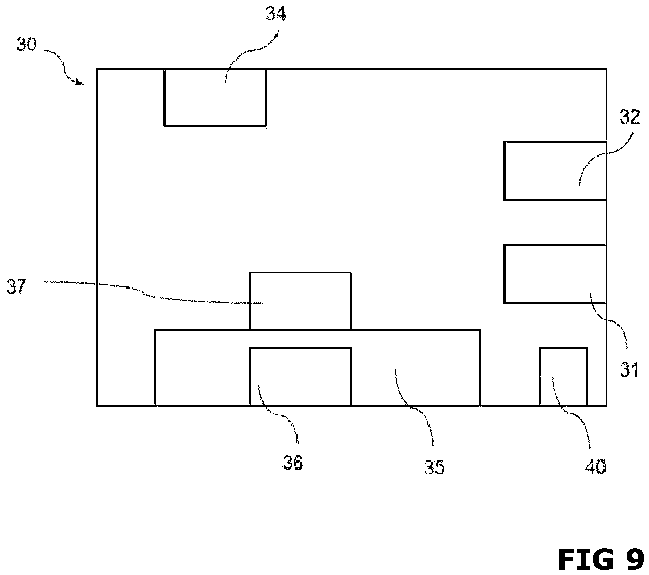

Figur 9 zeigt die zuvor beschriebene Recheneinrichtung 30 als Computer, mit einem computerlesbaren Medium umfassend computerlesbare Anweisungen bzw. Befehle, die bei der Ausführung durch einen Computer diesen veranlassen, eines der zuvor beschriebenen Verfahren durchzuführen. Der Computer umfasst zumindest einen Rechenprozessor 32 und eine Speichereinrichtung 34 und ist optional mit dem KI-Modul 31 verbunden ist. Die zuvor beschriebenen Verfahren zum Überprüfen der Qualität zumindest einer Ultraschallschweissverbindung an einem Werkstück gemäss einer der Figuren 1 bis 5 können als ein computerimplementiertes Verfahren ausgeführt sein.

### Bezugszeichenliste

- 15: Werkstück
- 20: Messvorrichtung
- 21: Schwingungsaufnahmeeinrichtung
- 24: Temperatursensor
- 25: optisches Mikrofon
- 26: Detektionskopf
- 27: Glasfaser
- 30: Recheneinrichtung
- 31: KI-Modul
- 32: Rechenprozessor
- 34: Speichereinrichtung
- 35: Anzeigeeinrichtung
- 36: Lichtsignal
- 37: Lautsprecher
- 40: Steuereinrichtung
- 80: Ultraschallschweissvorrichtung
- 81: Steuereinrichtung von 80
- 85: Sonotrode
- 86: Booster
- 87: Konverter
- 88: Generator
- 89: Werkstücktransporteinrichtung
- 120: Messvorrichtung
- 125: Körperschallsensor
- 220: Messvorrichtung
- 225: Sensor
- L: Laserstrahl
- SS: Schwingungssignal
- AS: Auslenkung von SS
- EM: elektrische Messsignale
- t: Zeit
- f: Frequenz
- SB: Signalblock
- OK: Indikative Information - weiterverwendbares Werkstück
- nOK: Indikative Information - nicht-weiterverwendbares Werkstück (steht für not OK)
- FT: Fast-Fourier-Transformation
- WS: Warnsignal
- aWS: akustisches Warnsignal
- vWS: visuelles Warnsignal
- U: Ultraschall
- F: Anpresskraft

## Patentansprüche

1. Verfahren zum Überprüfen der Qualität zumindest einer Ultraschallschweissverbindung während dem Erzeugen der Ultraschallschweissverbindung, mit zumindest einer Schwingungsaufnahmeeinrichtung (21), und einer Recheneinrichtung (30) umfassend zumindest die folgenden Schritte:
a) Detektieren von Schwingungssignalen (SS) mit der zumindest einen Schwingungsaufnahmeeinrichtung (21), wobei die Schwingungssignale (SS) von zumindest einer Komponente einer Ultraschallschweissvorrichtung (80) und zumindest einem Werkstück (15) beeinflusst werden und wobei zumindest zwei Schwingungssignale (SS) insbesondere in einem einzigen Bereich oder einer einzigen Position, beabstandet von der zumindest einen Komponente der Ultraschallschweissvorrichtung (80) und dem zumindest einem Werkstück (15), detektiert werden;
b) Erzeugen von elektrischen Messsignale (EM) in der Schwingungsaufnahmeeinrichtung (21) auf Basis der detektierten Schwingungssignale (SS);
c) Übermitteln der elektrischen Messsignale (EM) an die Recheneinrichtung (30);
d) Bearbeiten zumindest eines Signalblocks (SB) der elektrischen Messsignale (EM) in der Recheneinrichtung (30);
e) Errechnen zumindest eines Kennwerts auf Basis des zumindest einen Signalblocks (SB) der elektrischen Messsignale (EM);
f) Vergleichen des zumindest einen Kennwerts mit zumindest einem Referenzwert in der Recheneinrichtung (30);
g) Bestimmen einer für die Qualität der Ultraschallschweissverbindung indikative Information (OK; nOK) basierend auf dem Vergleich des zumindest einen Kennwerts mit dem zumindest einem Referenzwert, und insbesondere Ausgabe eines Warnsignals (WS).

2. Verfahren nach Anspruch 1, **dadurch gekennzeichnet, dass** die übermittelten elektrischen Messsignale (EM) mithilfe der Recheneinrichtung (30) zeitlich abgetastet werden.

3. Verfahren nach Anspruch 1 oder 2, **dadurch gekennzeichnet, dass** die elektrischen Messsingale (EM) in Signalblöcke (SB) unterteilt werden.

4. Verfahren nach einem der zuvor genannten Ansprüche, **dadurch gekennzeichnet, dass** im Schritt d) eine Fouriertransformation (FT) mit zumindest dem einen bearbeiteten Signalblock durchgeführt wird, und insbesondere der zumindest eine transformierte Signalblock einem KI-Modul (31) übermittelt wird, oder insbesondere an ein Regressions-Modul übermittelt wird.

5. Verfahren nach einem der zuvor genannten Ansprüche, **dadurch gekennzeichnet, dass** im Schritt d) eine Hilbert Transformation mit zumindest dem einen bearbeiteten Signalblock (SB) durchgeführt wird, und insbesondere der zumindest eine transformierte Signalblock einem KI-Modul (31) übermittelt wird, oder insbesondere an ein Regressions-Modul übermittelt wird und/oder im Schritt d) eine Cepstrum Transformation mit zumindest dem einen bearbeiteten Signalblock (SB) durchgeführt wird, und insbesondere der zumindest eine transformierte Signalblock einem KI-Modul (31) übermittelt wird, oder insbesondere an ein Regressions-Modul übermittelt wird.

6. Verfahren nach Anspruch 4 oder 5, **dadurch gekennzeichnet, dass** ein oder mehrere Maximalwerte im transformierten Signalblock erfasst werden und insbesondere eine Analysekurve auf Basis des transformierten Signalblocks erzeugt wird.

7. Verfahren nach Anspruch 6, **dadurch gekennzeichnet, dass** eine Differenzkurve zwischen der Analysekurve und einer ersten Referenzkurve erzeugt wird, und insbesondere der zumindest eine Kennwert mithilfe der Differenzkurve erstellt wird.

8. Verfahren nach einem der zuvor genannten Ansprüche, **dadurch gekennzeichnet, dass** die Schwingungssignale (SS) eine Frequenz (f) und/oder eine Amplitude (AS) eines Luftschallsignals oder eines Körperschallsignals umfassen oder die Schwingungssignale (SS) aus einer Strom- oder Spannungsmessung resultieren.

9. Verfahren nach einem der zuvor genannten Ansprüche, **dadurch gekennzeichnet, dass** die Höherharmonischen der Schwingungssignale (SS) detektiert und insbesondere in Schritt d) bearbeitet werden.

10. Verfahren nach einem der zuvor genannten Ansprüche, **dadurch gekennzeichnet, dass** eine Temperaturabhängigkeit der detektierten Schwingungssingale (SS) zumindest im Schritt g) miteinbezogen wird.

11. Verfahren nach einem der zuvor genannten Ansprüche, **dadurch gekennzeichnet, dass** zumindest eine Verschleisserscheinung der zumindest einen Komponente der Ultraschallschweissvorrichtung (80) mithilfe der Schwingungssignale (SS) erkannt wird.

12. Messvorrichtung zum Überprüfen der Qualität zumindest einer Ultraschallschweissverbindung an einem Werkstück (15), während dem Erzeugen der Ultraschallschweissverbindung umfassend zumindest eine Schwingungsaufnahmeeinrichtung (21) zum Detektieren von Schwingungssignalen (SS), eine Recheneinrichtung (30) zum Vergleichen zumindest eines Kennwerts mit zumindest einem Referenzwert, wobei die Recheneinrichtung (30) eine Anzeigeeinrichtung (35) veranlasst, eine für die Qualität der Ultraschallschweissverbindung indikative Information (OK; nOK) basierend auf dem Vergleich des zumindest einen Kennwerts mit dem zumindest einem Referenzwert anzuzeigen, wobei insbesondere das Verfahren nach einem der Ansprüche 1 bis 11 ausführbar ist.

13. Messvorrichtung nach Anspruch 12, **dadurch gekennzeichnet, dass** die Schwingungsaufnahmeeinrichtung (21) ein Mikrofon, oder zumindest ein piezoelektrischer Schwingungsaufnehmer (225), oder zumindest ein Köperschallmesseinrichtung (125) ist, und insbesondere das Mikrofon ein optisches Mikrofon (25) ist.

14. Messvorrichtung nach Anspruch 12 oder 13, **dadurch gekennzeichnet, dass** zumindest eine Steuereinrichtung (40) vorhanden ist, und mit der zumindest einen Recheneinrichtung (30) verbunden ist, und die zum Austausch von Signaldaten und Befehlsdaten zumindest mit der Schwingungsaufnahmeeinrichtung (21) verbunden ist und/oder die Steuereinrichtung (40) Befehlsdaten für die Recheneinrichtung (30) bereitstellt, um die indikative Information (OK; nOK) an der Anzeigeeinrichtung (35) auszugeben.

15. Computerprogramm, umfassend Befehle, die bei einer Ausführung des Computerprogramms durch einen Computer, die Messvorrichtung nach einem der Ansprüche 12 bis 14 veranlasst, ein Verfahren nach einem der Ansprüche 1 bis 11 auszuführen.
